Europäisches Patentamt

European Patent Office

Office européen des brevets

(11) Veröffentlichungsnummer: **0 152 767**
**B1**

# (12) EUROPÄISCHE PATENTSCHRIFT

(45) Veröffentlichungstag der Patentschrift:
**17.09.86**

(51) Int. Cl.⁴: **B 62 D 41/00**

(21) Anmeldenummer: **85100503.3**

(22) Anmeldetag: **18.01.85**

(54) **Einrichtung zur Erkennung eines Unfallschadens an einem Kraftfahrzeug.**

(30) Priorität: **03.02.84 DE 3403842**

(43) Veröffentlichungstag der Anmeldung:
**28.08.85 Patentblatt 85/35**

(45) Bekanntmachung des Hinweises auf die Patenterteilung:
**17.09.86 Patentblatt 86/38**

(84) Benannte Vertragsstaaten:
**AT BE CH FR GB IT LI LU NL SE**

(56) Entgegenhaltungen:
**DE - A - 2 429 496**
**US - A - 3 707 300**

(73) Patentinhaber: **Grümer, Helmut, Dammweg 23,
D-5204 Lohmar 1 (DE)**

(72) Erfinder: **Grümer, Helmut, Dammweg 23,
D-5204 Lohmar 1 (DE)**

(74) Vertreter: **Marx, Lothar, Dr. et al, Patentanwälte
Schwabe, Sandmair, Marx Stuntzstrasse 16,
D-8000 München 80 (DE)**

ACTORUM AG

# Beschreibung

Die Erfindung betrifft eine Einrichtung zur Erkennung eines Unfallschadens an einem Kraftfahrzeug.

Insbesondere für den Käufer eines Gebrauchtwagens ist es wesentlich zu wissen, ob dieser Wagen bereits an einem Unfall beteiligt war oder nicht, da selbst für optisch und auch technisch einwandfreie Unfallwagen oft sehr viel geringere Preise gezahlt werden als für einen entsprechenden, unfallfreien Wagen.

Die Feststellung eines eventuellen Unfallschadens erfolgt bisher nur durch visuelle Überprüfung der Teile, die bei einem Unfall in Mitleidenschaft gezogen werden können, auf nachträgliche Veränderungen, bspw. frische Schweissnähte, Einbau neuer Teile usw. Eine solche visuelle Überprüfung ist jedoch mit gewissen Unsicherheiten behaftet, da bspw. frische Schweissnähte durch entsprechende Behandlungen „altern" und deshalb von den ursprünglichen Schweissnähten nicht mehr unterschieden werden können.

Als Alternative hierzu ist selbstverständlich auch die zerstörungsfreie Werkstoffprüfung, bspw. mit Ultraschall oder Röntgenstrahlen, möglich. Eine solche Überprüfung ist jedoch sehr aufwendig, so dass sie nicht als normale Reihenuntersuchungen für Gebrauchtwagen durchgeführt werden kann.

Der Erfindung liegt deshalb die Aufgabe zu Grunde, eine Einrichtung zur Erkennung eines Unfallschadens an einem Kraftfahrzeug zu schaffen, bei der die oben erwähnten Nachteile nicht auftreten.

Insbesondere soll eine Einrichtung vorgeschlagen werden, die auf zweifelsfreie, auch für den Laien durchführbare Weise jeden Unfall – mit Ausnahme von extrem leichten Bagatellschäden – anzeigt.

Dies wird erfindungsgemäss durch die im kennzeichnenden Teil des Anspruchs 1 der angegegenen Merkmale erreicht.

Zweckmässige Ausführungsformen sind in den abhängigen Ansprüchen angegeben.

Die mit der Erfindung erzielten Vorteile beruhen insbesondere darauf, dass die strukturell wesentlichen, bei einem Unfall in Mitleidenschaft gezogenen Teile des Fahrzeugs, insbesondere die Knautschzonen, mit einer Markierung versehen werden, die bei einer Verformung dieser Zone irreparabel zerstört wird. Als Markierungen kommen entweder Einprägungen oder Einstanzungen, die mittels eines Roboters an diesen Stellen aufgebracht werden können, oder aber sogenannte „zerstörbare Folien" in Frage, die in verschiedenen Ausführungsformen erhältlich sind und einfach auf die entsprechenden Stellen aufgeklebt werden können. Dabei ist es günstig, wenn die Folien bzw. die Einprägungen mit Zeichen, Symbolen usw. versehen werden, um die Fälschung dieser Markierungen zu erschweren.

Bei einem Unfall eines solchen Fahrzeugs wird beispielsweise die Knautschzone verformt, wodurch die Folien irreparabel zerstört werden oder eine eventuelle Einprägung entsprechend verformt wird. Die Zerstörung der Folie bzw. die Verformung der Einprägung kann man auch nach der anschliessenden Reparatur des Fahrzeugs ohne weiteres erkennen, so dass der eventuelle Käufer dieses Fahrzeugs eine sichere Information darüber erhält, dass es sich um einen Unfallwagen handelt. Er wird seine Preisgespräche dann entsprechend führen.

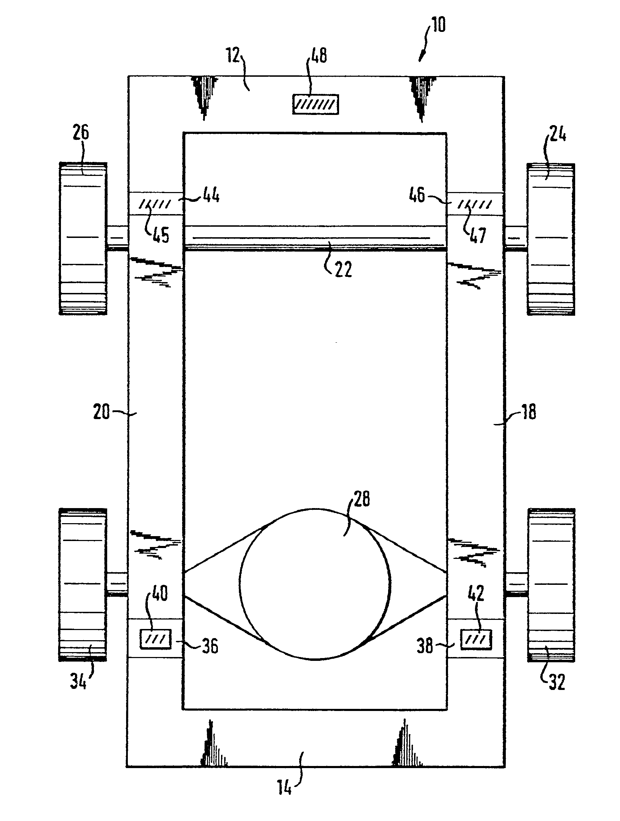

Die Erfindung wird im folgenden anhand von Ausführungsbeispielen unter Bezugnahme auf die beiliegende, schematische Zeichnung näher erläutert, deren einzige Figur eine Draufsicht auf den Rahmen eines Kraftfahrzeugs zeigt.

Der allgemein durch das Bezugszeichen 10 angedeutete Rahmen weist zwei in Fahrtrichtung des Fahrzeugs verlaufende Längsholme 18, 20 auf, die vorne und hinten durch jeweils einen Querholm 12, 14 verbunden sind.

Die Längsholme 18, 20 tragen in üblicher Weise die Vorderachse 22 mit den Vorderrädern 24, 26 sowie die angetriebene Hinterachse 28 mit den Hinterrädern 32, 34.

Dieser Aufbau ist jedoch nicht wesentlich, d.h., die angetriebene Achse 28 könnte auch die Vorderachse sein.

Der Rahmen 10 ist mit den üblichen Knautschzonen 36, 38, 44, 46 versehen, die sich bei der dargestellten Ausführungsform in den beiden Längsholmen 18, 20 befinden. Diese Knautschzonen werden bei einem Aufprall des Kraftfahrzeugs, wie er bei einem Unfall auftritt, verformt und nehmen dabei einen Teil der Bewegungsenergie des Fahrzeugs auf; dieser so absorbierte Teil steht dann für die mögliche Verformung der Fahrgastzelle nicht mehr zur Verfügung, d.h., der Fahrgast ist gegen diese Kräfte abgeschirmt.

Der Rahmen 10 ist an den Stellen, die bei einem Unfall direkt in Mitleidenschaft gezogen, mit einer Markierung versehen, wobei zwei verschiedene Varianten dargestellt sind. Auf die hinteren Knautschzonen 36, 38 der Längsholme 18, 20 sind zerstörbare Kunststofffolien 40, 42 geklebt, die mit einem charakteristischen Stempelaufdruck versehen sind. Eine entsprechende, zerstörbare Folie 48 befindet sich an dem vorderen Querholm 12, der auch bei einem leichten Auffahrunfall bereits verformt wird.

Die vorderen Knautschzonen 44, 46 der Längsholme 18, 20 sind mit Einprägungen bzw. Einstanzungen 45, 47 versehen, die beispielsweise während der Fertigung des Rahmens 10 durch einen Roboter erzeugt werden können.

Die zerstörbaren Folien 40, 42, 48 können aus einer Kunststofffolie bestehen, die mit Sollbruchlinien versehen ist. Bei einer starken Verformung dieser Kunststofffolie bricht sie an diesen Sollbruchlinien auf und kann im allgemeinen nicht mehr zur ursprünglichen Form zusammengesetzt werden.

Besonders gute Ergebnisse werden jedoch mit brüchigen, leicht zerstörbaren Vinylfilmen erreicht, wie sie von der Firma 3 M Company unter der Bezeichnung Scotch Mark (eingetragenes Warenzeichen) vertrieben werden. Diese Vinylfilme sind mit einem hochwertigen Acrylat-Klebstoff ausgerü-

2

stet, der sich durch eine gute Anfangsklebkraft und eine überragende Endklebkraft auf glatten und sauberen Oberflächen auszeichnet.

Nach dem Bedrucken dieser brüchigen Vinylfolie wird die Druckfläche im Siebdruckverfahren mit einem Zweikomponentenlack bestrichen, wie es aus der DE-A-2 941 087 bekannt ist.

Bei einem Unfall dieses Fahrzeugs verformt sich der Rahmen 10 und insbesondere seine Knautschzonen 36, 38, 44, 46, wodurch sich eine entsprechende Verformung der zerstörbaren Folien 40, 42, 48 bzw. der Einprägungen oder Einstanzungen 45, 47 ergibt. Auch bei einer Reparatur des Fahrzeugs ist es unmöglich, diese Markierungen exakt auf die ursprüngliche Form zurückzubringen, da insbesondere die brüchigen Vinylhaftfolien bei einer zu starken Verformung abbröckeln und ihre ursprüngliche Form verlieren.

Die entsprechende Verformung der Markierungen lässt sich also später sofort, auch von einem Laien, erkennen, so dass ohne Probleme festgestellt werden kann, ob es sich um einen Unfallwagen handelt, dessen Rahmen verformt worden ist.

Selbstverständlich ist es auch möglich, diese Markierungen noch an anderen Stellen anzubringen, beispielsweise auf der Innenfläche von Karosserieteilen, die bei einem Unfall erfahrungsgemäss besonders in Mitleidenschaften gezogen werden.

## Patentansprüche

1. Einrichtung zur Erkennung eines Unfallschadens an einem Kraftfahrzeug, dadurch gekennzeichnet, dass

a) an mindestens einer bei einem Unfall verformbaren Stelle (12, 36, 38, 44, 46) des Kraftfahrzeugs eine Markierung (40, 42, 45, 47) vorgesehen ist und dass

b) die Markierung bei einer Verformung dieser Stelle (12, 36, 38, 44, 46) irreparabel zerstört wird.

2. Einrichtung nach Anspruch 1, dadurch gekennzeichnet, dass sich die verformbare Stelle (12, 36, 38, 44, 46) am Rahmen (12, 14, 18, 20) des Kraftfahrzeugs befindet.

3. Einrichtung nach einem der Ansprüche 1 oder 2, dadurch gekennzeichnet, dass sich die verformbare Stelle in einer Knautschzone (36, 38, 44, 46) des Kraftfahrzeugs befindet.

4. Einrichtung nach einem der Ansprüche 1 bis 3, dadurch gekennzeichnet, dass auf der verformbaren Stelle (12, 36, 38, 44, 46) eine zerstörbare Folie (40, 42, 48) angebracht, insbesondere aufgeklebt ist.

5. Einrichtung nach Anspruch 4, dadurch gekennzeichnet, dass die zerstörbare Folie (36, 38, 48) aus einer mit Sollbruchlinien versehenen Kunststoffolie besteht.

6. Einrichtung nach Anspruch 5, dadurch gekennzeichnet, dass die zerstörbare Folie (36, 38, 48) aus einem brüchigen Vinyl-Film besteht.

7. Einrichtung nach einem der Ansprüche 4 bis 6, dadurch gekennzeichnet, dass die zerstörbare Folie (40, 42, 48) mit einem Stempelaufdruck und mit einem Zweikomponentenlack versehen ist.

8. Einrichtung nach einem der Ansprüche 1 bis 3, dadurch gekennzeichnet, dass die Markierung (45, 47) auf die Stelle (44, 46) eingeprägt bzw. eingestanzt ist.

## Claims

1. A device for the recognition of accident damage to a motor vehicle, characterized in that

a) a marking (40, 42, 45, 47) is provided on at least one spot (12, 36, 38, 44, 46), deformable in an accident, of the motor vehicle, and that

b) the marking is irreparably destroyed with the deformation of this spot (12, 36, 38, 44, 46).

2. Device according to claim 1, characterized in that the deformable spot (12, 36, 38, 44, 46) is situated on the chassis (12, 14, 18, 20) of the motor vehicle.

3. Device according to claim 1 or 2, characterized in that the deformable spot is situated in a crusher zone (36, 38, 44, 46) of the motor vehicle.

4. Device according to one of the claims 1 to 3, characterized in that a destructible sheeting (40, 42, 48) is applied to the deformable spot (12, 36, 38, 44, 46), especially it is pasted on.

5. Device according to claim 4, characterized in that the destructible sheeting (36, 38, 48) consists of a plastic sheeting provided with predetermined breaking lines.

6. Device according to claim 5, characterized in that the destructible sheeting (36, 38, 48) consists of a fragile vinyl film.

7. Device according to one of the claims 4 to 6, characterized in that the destructible sheeting (40, 42, 48) is provided with a stamp and with a two-component varnish.

8. Device according to one of the claims 1 to 3, characterized in that the marking (45, 47) is stamped in or engraved on the spot (44, 46).

## Revendications

1. Dispositif pour la détection d'un dommage accidentel survenu sur un véhicule automobile, caractérisé par le fait que:

a) en un endroit au moins (12, 36, 38, 44, 46) du véhicule automobile est prévu un marquage (40, 42, 45, 47) et

b) ledit marquage est détruit de manière irréparable lors de la déformation de cet endroit (12, 36, 38, 44, 46).

2. Dispositif selon la revendication 1, caractérisé par le fait que l'endroit pouvant être déformé (12, 36, 38, 44, 46) se trouve sur le châssis (12, 14, 18, 20) du véhicule automobile.

3. Dispositif selon l'une des revendications 1 ou 2, caractérisé par le fait que l'endroit pouvant être déformé se trouve dans une zone pouvant être froissée (36, 38, 44, 46) du véhicule automobile.

4. Dispositif selon l'une des revendications 1 à 3, caractérisé par le fait que sur l'endroit pouvant être déformé (12, 36, 38, 44, 46) est fixée, en particulier par collage, une feuille destructible (40, 42, 48).

5. Dispositif selon la revendication 4, caractérisé par le fait que la feuille destructible (36, 38, 48) est constituée d'une feuille en matière plastique munie de lignes de ruptures imposées.

6. Dispositif selon la revendication 5, caractérisé par le fait que la feuille destructible (36, 38, 48) est constituée d'une feuille en vinyle susceptible de rupture.

7. Dispositif selon l'une des revendications 4 à 6, caractérisé par le fait que la feuille destructible (40, 42, 48) est munie d'une impression effectuée au tampon et revêtue d'un vernis à deux composants.

8. Dispositif selon l'une des revendications 1 à 3, caractérisé par le fait que le marquage (45, 47) est poinçonné ou gravé sur l'endroit (44, 46).